# EUROPÄISCHE PATENTSCHRIFT

(11) **EP 2 191 554 B1**
(45) Veröffentlichungstag und Bekanntmachung des Hinweises auf die Patenterteilung: **06.04.2011**
(21) Anmeldenummer: 07801987.4
(22) Anmeldetag: 22.08.2007
(51) Int. Cl.: H02J 13/00, H04L 12/24

(54) **VERFAHREN ZUM PARAMETRIEREN EINER SCHALTANLAGE**
METHOD FOR PARAMETERIZING A SWITCHGEAR ASSEMBLY
PROCÉDÉ POUR PARAMÉTRER UNE INSTALLATION DE COMMUTATION

(43) Veröffentlichungstag der Anmeldung: 02.06.2010
(73) Patentinhaber: Siemens Aktiengesellschaft, 80333 München (DE)
(72) Erfinder: LANG, Gerhard, 14557 Wilhelmshorst (DE); NEUMANN, Götz, 13627 Berlin (DE)
(86) Internationale Anmeldenummer: PCT/EP2007/007566
(87) Internationale Veröffentlichungsnummer: WO 2009/024179

(56) Entgegenhaltungen:
- US-A- 5 768 148
- US-A1- 2003 179 742

## Beschreibung

Die Erfindung bezieht sich auf ein Verfahren zum Parametrieren einer Schaltanlagenstation einer elektrischen Schaltanlage und zum Parametrieren von der Schaltanlagenstation zugeordneten Feldgeräten der elektrischen Schaltanlage, wobei bei dem Verfahren Parameter zum Parametrieren der Schaltanlagenstation und Parameter zum Parametrieren der Feldgeräte erzeugt werden.

Automatisierungssysteme sind im Bereich der Schaltanlagentechnik bekanntermaßen hierarchisch aufgebaut, wobei ein oder mehrere Feldgeräte einer Schaltanlagenstation hierarchisch untergeordnet sind. Die Funktion der Feldgeräte besteht darin, auf der Feldleitebene Informationen, wie z. B. Messwerte oder Messwertmeldungen, die sich auf die elektrische Schaltanlage beziehen, zu erfassen. Betriebsrelevante Informationen werden von den Feldgeräten über ein Kommunikationsnetzwerk an die jeweils zugeordnete Schaltanlagenstation weitergeleitet. Die Schaltanlagenstation übernimmt die feldübergreifenden Aufgaben, wie z. B. Automatisierungsfunktionen, Stationsbetrieb, Archivierung und/oder Protokollumsetzung in Richtung einer übergeordneten Netzleitebene. Die genannten Komponenten, also die Schaltanlagenstation sowie die untergeordneten Feldgeräte, werden bekanntermaßen über Konfigurationssysteme parametriert. Diese Konfigurationssysteme erzeugen Parametersätze zum Parametrieren der Schaltanlägenstation sowie Parametersätze zum Parametrieren der zugeordneten Feldgeräte.

Ein solches konfigurationssystem ist aus US 5768148A bekannt Die genannten Konfigurationssysteme bestehen üblicherweise aus zwei Einheiten, nämlich einem Eingabesystem, das über eine Nutzerschnittstelle eine Parametereingabe ermöglicht, und einem Generier-Verwaltungssystem, das zur Erzeugung und Verwaltung ladbarer Parameterdateien bestimmt ist. Am Ende eines Parametriervorganges stellen die Konfigurationssysteme jeweils den Parametersatz zum Parametrieren der Schaltanlagenstation und die Parametersätze zum Parametrieren der Feldgeräte zur Verfügung. Die Parametersätze werden nachfolgend zu den Feldgeräten und der Schaltanlagenstation übertragen, damit dort die Geräteparametrierung stattfinden kann. Konfigurationssysteme der beschriebenen Art werden beispielsweise von der Fa. Siemens AG unter dem Produktnamen DIGSI/Netzwerkkonfigurator vertrieben.

Der Erfindung liegt die Aufgabe zugrunde, ein Verfahren zum Parametrieren einer Schaltanlagenstation und zum Parametrieren der zugeordneten Feldgeräte anzugeben, bei dem im Falle einer Änderung der Parametrierung einzelner oder mehrerer Geräte der Schaltanlage zuverlässig eine Aktualisierung aller betroffenen Parametrierungen erfolgt und gewährleistet ist, dass stets alle zu parametrierenden Feldgeräte sowie die Schaltanlagenstation jeweils mit dem aktuellen Parametersatz ausgestattet sind. Insbesondere soll vermieden werden, dass einzelne der Feldgeräte oder die Schaltanlagenstation mit alten Parametersätzen betrieben werden, die nicht mehr zu den aktualisierten Parametersätzen der übrigen Geräte passen.

Diese Aufgabe wird ausgehend von einem Verfahren der eingangs angegebenen Art erfindungsgemäß durch die kennzeichnenden Merkmale des Anspruchs 1 gelöst. Vorteilhafte Ausgestaltungen des erfindungsgemäßen Verfahrens sind in Unteransprüchen angegeben.

Danach ist erfindungsgemäß vorgesehen, dass ein Gemeinschaftsparametersatz generiert wird, aus dem sowohl ein die Funktionsweise der Schaltanlagenstation festlegender Stationsparametersatz als auch für jedes Feldgerät jeweils ein Feldgeräteparametersatz extrahierbar ist, der Gemeinschaftsparametersatz in einem Kommunikationsnetzwerk allen daran angeschlossenen Feldgeräten zur Verfügung gestellt wird und jedes Feldgerät den zugehörigen Feldgeräteparametersatz aus dem Gemeinschaftsparametersatz über das Kommunikationsnetzwerk extrahiert und sich gemäß dem extrahierten Feldgeräteparametersatz parametriert.

Ein wesentlicher Vorteil des erfindungsgemäßen Verfahrens ist darin zu sehen, dass bei diesem nicht separate Parametersätze zum Parametrieren der Schaltanlagenstation und separate Parametersätze zum Parametrieren der Feldgeräte erzeugt werden, sondern stattdessen ein einziger, einheitlicher Gemeinschaftsparametersatz, in dem alle für eine Parametrierung erforderlichen Daten enthalten sind. Durch den Gemeinschaftsparametersatz wird - im Unterschied zu dem eingangs erläuterten vorbekannten Verfahren - sichergestellt, dass alle Geräte stets mit dem aktuellen Parametersatz betrieben werden, da alle Geräte zu jedem Zeitpunkt auf ein und denselben Gemeinschaftsparametersatz zurückgreifen. Es ist somit bei dem erfindungsgemäßen Verfahren nicht möglich, dass Geräte, aus welchen Gründen auch immer, auf unterschiedlich aktuelle Einzelparametersätze zurückgreifen können.

Ein weiterer wesentlicher Vorteil des erfindungsgemäßen Verfahrens besteht darin, dass die Feldgeräte ihren jeweils zugehörigen Feldgeräteparametersatz durch eine Extraktion aus dem Gemeinschaftsparametersatz gewinnen können; durch diese Vorgehensweise wird erreicht, dass die Feldgeräte nur diejenigen Daten über das Kommunikationsnetzwerk erfragen müssen, die für das jeweilige Gerät relevant und für die jeweilige Parametrierung erforderlich sind; irrelevante Datensätze müssen also nicht übertragen werden.

Aufgrund des Vorhandenseins eines Gemeinschaftsparametersatzes ist es darüber hinaus möglich, Komponenten einer hierarchisch untergeordneten Ebene für Aufgaben einer übergeordneten Hierarchieebene einzusetzen. Gemäß einer vorteilhaften Ausgestaltung des Verfahrens ist demgemäß vorgesehen, dass die Funktion der Schaltanlagenstation durch eines der Feldgeräte oder durch mehrere Feldgeräte gemeinsam wahrgenommen wird. Ein solches Verteilen der Schaltanlagenstationsfunktion auf eines oder mehrere Feldgeräte ist in vorteilhafter Weise möglich, weil in dem Gemeinschaftsparametersatz auch alle für den Betrieb der Schaltanlagenstation erforderlichen Daten enthalten sind, so dass durch eine entsprechende Extraktion der Parameter durch die Feldgeräte, sofern sie mit entsprechend geeigneter Hardware ausgestattet sind, auch die Feldgeräte die Funktionalität einer "virtuellen" Schaltanlagenstation übernehmen können.

Bevorzugt wird der Gemeinschaftsparametersatz mit einem Konfigurationssystem erzeugt, das an das Kommunikationsnetzwerk angeschlossen ist. Eine solche Ausgestaltung ermöglicht es beispielsweise, den erzeugten Gemeinschaftsparametersatz unmittelbar in das Kommunikationsnetzwerk einzuspeisen und den an das Kommunikationsnetzwerk angeschlossenen Feldgeräten sowie - sofern vorhanden - der Schaltanlagenstation zeitnah zur Verfügung zu stellen.

Besonders bevorzugt wird das Kommunikationsnetzwerk mit einer Peer-to-Peer-Netzwerkarchitektur betrieben. Eine Peer-to-Peer-Netzwerkarchitektur ermöglicht es nämlich in vorteilhafter Weise, eine Aktualisierung der Parameter der Feldgeräte sowie der Parameter der Schaltanlagenstation zeitgleich automatisch anzustoßen, so dass die Aktualisierung der Parametersätze quasi parallel abläuft. Die Schaltanlage steht somit im Falle einer Parameteraktualisierung relativ zügig wieder für den normalen Betrieb zur Verfügung.

Vorzugsweise wird der Gemeinschaftsparametersatz innerhalb der Peer-to-Peer-Netzwerkarchitektur redundant gespeichert, um einen Datenverlust zu vermeiden.

Der Gemeinschaftsparametersatz kann innerhalb der Peer-to-Peer-Netzwerkarchitektur beispielsweise in einem Zentralgerät der Schaltanlagenstation gespeichert sein. Ist der Gemeinschaftsparametersatz in der Schaltanlagenstation gespeichert, so können die Feldgeräte diesen beispielsweise komplett oder in Teilen von der Schaltanlagenstation laden, ihren zugehörigen Feldgeräteparametersatz aus dem geladenen Gemeinschaftsparametersatz gewinnen und sich gemäß dem gewonnenen Feldgeräteparametersatz parametrieren.

Alternativ kann der Gemeinschaftsparametersatz innerhalb der Peer-to-Peer-Netzwerkarchitektur auch in einem Feldgerät gespeichert sein. Bei dieser Ausgestaltung können die übrigen Feldgeräte den Gemeinschaftsparametersatz vollständig oder in Teilen laden, den zugehörigen Feldgeräteparametersatz aus dem komplett oder in Teilen geladenen Gemeinschaftsparametersatz gewinnen und sich gemäß dem gewonnenen Feldgeräteparametersatz parametrieren.

Als besonders vorteilhaft wird es angesehen, wenn der Gemeinschaftsparametersatz nicht in einer einzigen Komponente, sondern innerhalb der Peer-to-Peer-Netzwerkarchitektur verteilt gespeichert wird. Im Falle einer verteilten Abspeicherung kann nämlich mit einer noch größeren Sicherheit ein Datendiebstahl durch unbefugte Dritte vermieden werden; denn zum Stehlen des Gemeinschaftsparametersatzes muss in diesem Fall nicht nur die Sicherung eines der Speichergeräte (z. B. Feldgerät oder Schaltanlagenstation) der Peer-to-Peer-Netzwerkarchitektur, sondern die Sicherung in jedem der an der Speicherung beteiligten Speichergeräte der Peer-to-Peer-Netzwerkarchitektur überwunden werden.

Im Falle einer verteilten Speicherung des Gemeinschaftsparametersatzes innerhalb der Peer-to-Peer-Netzwerkarchitektur wird es als vorteilhaft angesehen, wenn die Feldgeräte den zugehörigen Feldgeräteparametersatz aus dem verteilt gespeicherten Gemeinschaftsparametersatz über das Kommunikationsnetzwerk extrahieren und sich gemäß dem extrahierten Feldgeräteparametersatz parametrieren.

Im Hinblick auf eine möglichst kostengünstige Durchführung des Verfahrens wird es darüber hinaus als vorteilhaft angesehen, wenn die Hardware der Feldgeräte für die Abspeicherung des Gemeinschaftsparametersatzes verwendet wird und die verteilte Abspeicherung des Gemeinschaftsparametersatzes innerhalb der Peer-to-Peer-Netzwerkarchitektur auf mindestens zwei Feldgeräte verteilt wird. Die Feldgeräte üben bei dieser Ausgestaltung des Verfahrens also eine Doppelfunktion auf: Zum einen stellen sie gemeinsam mit anderen Feldgeräten ein verteiltes Abspeichern des Gemeinschaftsparametersatzes zur Verfügung, und zum anderen übernehmen sie die für Feldgeräte übliche Feldgerätefunktion, wie sie eingangs beschrieben worden ist.

Alternativ zu einer Peer-to-Peer-Netzwerkarchitektur kann auch eine Server-Client-Netzwerkarchitektur gewählt werden; bei dieser Ausgestaltung werden die Feldgeräte den Gemeinschaftsparametersatz vorzugsweise unter Nutzung von Server-Client-Verbindungen laden. Auch bei der Verwendung einer Server-Client-Netzwerkstruktur wird es als vorteilhaft angesehen, wenn der Gemeinschaftsparametersatz redundant gespeichert wird.

Der Gemeinschaftsparametersatz kann innerhalb einer solchen Server-Client-Netzwerkarchitektur in einem Zentralgerät der Schaltanlagenstation oder alternativ in einem Feldgerät gespeichert sein.

Die Erfindung bezieht sich außerdem auf eine Anordnung mit einer Schaltanlagenstation, Feldgeräten und einem Konfigurationssystem zum Parametrieren der Schaltanlagenstation und zum Parametrieren der Feldgeräte.

Erfindungsgemäß ist bei einer solchen Anordnung vorgesehen, dass das Konfigurationssystem geeignet ist, einen Gemeinschaftsparametersatz zu generieren, aus dem sowohl ein die Funktionsweise der Schaltanlagenstation festlegender Stationsparametersatz als auch für jedes Feldgerät jeweils ein Feldgeräteparametersatz extrahierbar ist, und in einem die Feldgeräte verbindenden Kommunikationsnetzwerk der jeweils aktuelle Gemeinschaftsparametersatz allen Feldgeräten zumindest zur Extraktion des eigenen Feldgeräteparametersatzes zur Verfügung steht.

Bezüglich der Vorteile der erfindungsgemäßen Anordnung sei auf die obigen Ausführungen im Zusammenhang mit dem erfindungsgemäßen Verfahren verwiesen, da die Vorteile der erfindungsgemäßen Anordnung denen des erfindungsgemäßen Verfahrens im Wesentlichen entsprechen.

Vorzugsweise ist die Schaltanlagenstation durch eines oder mehrere Feldgeräte gemeinsam gebildet, wobei das oder die Feldgeräte geeignet sind, aus dem Gemeinschaftsparametersatz den Stationsparametersatz zu extrahieren.

Die Erfindung wird nachfolgend anhand von Ausführungsbeispielen näher erläutert; dabei zeigen beispielhaft
- Figur 1: eine Anordnung, die zum besseren Verständnisses des technischen Hintergrunds erläutert wird,
- Figur 2: ein erstes Ausführungsbeispiel für eine erfin- dungsgemäße Anordnung, anhand derer beispiel- haft ein erstes Ausführungsbeispiel für das er- findungsgemäße Verfahren erläutert wird,
- Figur 3: ein Ausführungsbeispiel für eine erfindungsge- mäße Anordnung, bei der eine Speicherung des Gemeinschaftsparametersatzes in einer Schaltan- lagenstation erfolgt,
- Figur 4: ein Ausführungsbeispiel für eine erfindungsge- mäße Anordnung, bei der eine Speicherung des Gemeinschaftsparametersatzes in einem Feldgerät erfolgt,
- Figur 5: ein Ausführungsbeispiel für eine erfindungsge- mäße Anordnung, bei der eine Speicherung des Gemeinschaftsparametersatzes verteilt auf zwei Feldgeräte erfolgt,
- Figur 6: ein Ausführungsbeispiel für eine erfindungsge- mäße Anordnung, bei der zwei Feldgeräte funk- tional eine hardwaremäßig fehlende Schaltanla- genstation nachbilden, und
- Figur 7: ein Ausführungsbeispiel für eine erfindungsge- mäße Anordnung, bei der ein einziges Feldgerät funktional eine hardwaremäßig fehlende Schalt- anlagenstation nachbildet.

In den Figuren werden der Übersicht halber für identische oder vergleichbare Komponenten stets dieselben Bezugszeichen verwendet.

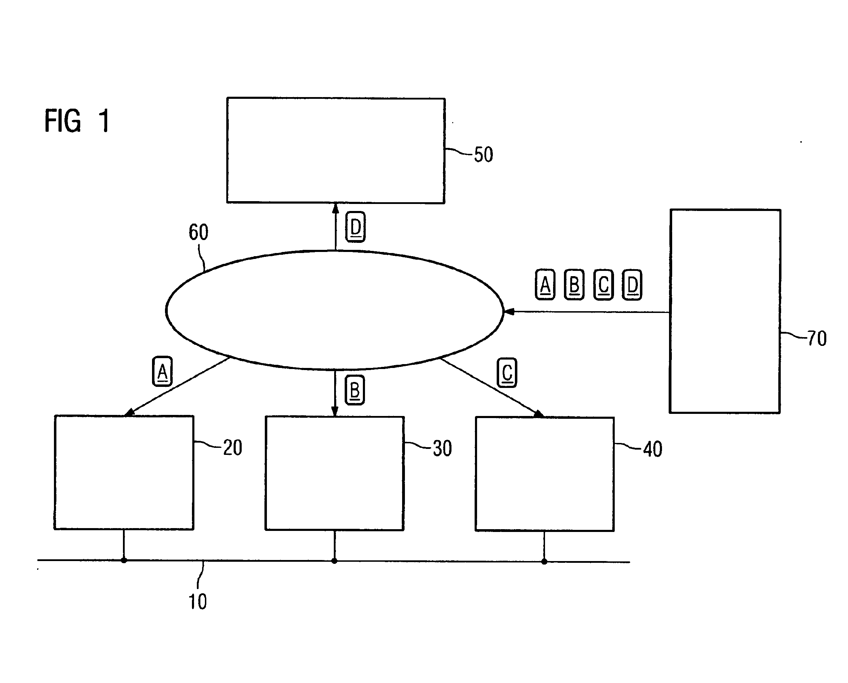

In der Figur 1 erkennt man - zur allgemeinen Erläuterung - eine Anordnung mit einer elektrischen Schaltanlage 10, mit der drei Feldgeräte 20, 30 und 40 elektrisch in Verbindung stehen. Die Aufgabe der Feldgeräte 20, 30 und 40 besteht darin, Informationen, die die elektrische Anlage 10 betreffen, zu erfassen und auszuwerten. Bei den Feldgeräten 20, 30 und 40 kann es sich beispielsweise um Schutzgeräte handeln, die im Falle eines Fehlers Teile der elektrischen Schaltanlage 10 ausschalten.

Darüber hinaus haben die Feldgeräte 20, 30 und 40 die Aufgabe, betriebsrelevante Informationen an eine hierarchisch übergeordnete Schaltanlagenstation 50 weiterzuleiten. Hierzu dient ein Kommunikationsnetzwerk 60, an das die Feldgeräte 20 30 und 40 sowie auch die Schaltanlagenstation 50 angeschlossen sind.

In der Figur 1 ist darüber hinaus ein Konfigurationssystem 70 dargestellt, das zum Parametrieren der Schaltanlagenstation 50 sowie der drei Feldgeräte 20, 30 und 40 dient. Das Konfigurationssystem 70 weist unter anderem ein nicht weiter dargestelltes Eingabesystem zur nutzerseitigen Parametereingabe sowie ein Generier- und Verwaltungssystem auf, mit dem Parametersätze A, B, C und D zum Parametrieren der Schaltanlagenstation 50 sowie der Feldgeräte 20, 30 und 40 erzeugt werden. Die Parametersätze zum Konfigurieren der Feldgeräte 20, 30 und 40 sind mit den Bezugszeichen A, B und C und der Parametersatz zum Konfigurieren der Schaltanlagenstation 50 mit dem Bezugszeichen D gekennzeichnet.

Die Anordnung gemäß Figur 1 wird zum Parametrieren der Schaltanlagenstation 50 sowie der drei Feldgeräte 20, 30 und 40 beispielsweise wie folgt betrieben:

Mit dem Konfigurationssystem 70 werden unter Verwendung des erwähnten Generier- und Verwaltungssystems die vier Parametersätze A, B, C und D erzeugt und als separate Dateien bzw. Datensätzen an die Schaltanlagenstation 50 sowie an die drei Feldgeräte 20, 30 und 40 übertragen, und zwar der Parametersatz D zur Schaltanlagenstation 50 und die Parametersätze A, B und C zu den drei Feldgeräten 20, 30 und 40.

Problematisch bei dem Parametrierungsverfahren gemäß der Figur 1 ist nun, dass im Falle einer Aktualisierung der Parametersätze A, B, C und D nicht sichergestellt ist, dass tatsächlich alle an die elektrische Schaltanlage 10 angeschlossenen Komponenten stets den aktuellen Parametersatz verwenden, beispielsweise dann, wenn die Übertragung eines der Parametersätze A, B, C oder D unterbleibt oder fehlschlägt. So ist es beispielsweise denkbar, dass eines der Feldgeräte, beispielsweise das Feldgerät 20, einen veralteten Parametersatz A weiterverwendet, obwohl die übrigen Geräte, also die beiden Feldgeräte 30 und 40 sowie die Schaltanlagenstation 50, schon aktuelle Parametersätze B', C' und D' verwenden.

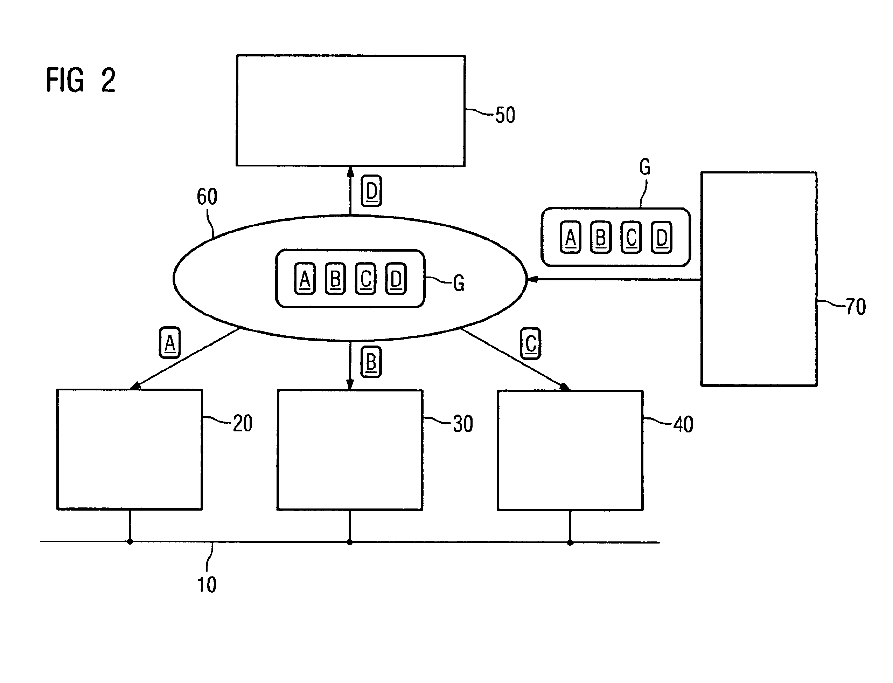

In der Figur 2 ist ein Ausführungsbeispiel für eine erfindungsgemäße Anordnung gezeigt, anhand derer das erfindungsgemäße Verfahren beispielhaft erläutert wird.

In der Figur 2 erkennt man, dass das Konfigurationssystem 70 im Unterschied zu dem Konfigurationssystem 70 gemäß Figur 1 keine separaten Parametersätze A, B, C und D erzeugt, sondern statt dessen einen Gemeinschaftsparametersatz G, aus dem Parametersätze A, B und C zur Parametrierung der Feldgeräte 20, 30 und 40 sowie ein Parametersatz D zur Parametrierung der Schaltanlagenstation 50 extrahierbar sind. Das Konfigurationssystem 70 erzeugt also keine separaten Dateien, sondern eine einzige einheitliche Datei, in der alle zur Parametrierung der an die elektrische Schaltanlage 10 angeschlossenen Komponenten vollständig enthalten sind.

Der Gemeinschaftsparametersatz G wird in dem Kommunikationsnetzwerk 60, das vorzugsweise mit einer Peer-to-Peer-Netzwerkarchitektur betrieben wird, zur Verfügung gestellt. Dies ermöglicht es den drei Feldgeräten 20, 30 und 40 sowie der Schaltanlagenstation 50, über das Kommunikationsnetzwerk 60 den jeweils erforderlichen Parametersatz A, B, C oder D aus dem Gemeinschaftsparametersatz G selbst zu extrahieren, um eine Geräteparametrierung durchführen zu können.

Durch den in der Figur 2 gezeigten Gemeinschaftsparametersatz G ist sichergestellt, dass in dem gesamten System ausschließlich Parametersätze zur Verfügung stehen, die aktuell sind und zusammenpassen, so dass stets alle an die elektrische Schaltanlage 10 angeschlossenen Komponenten mit derselben aktuellen Konfiguration betrieben werden.

Die Abspeicherung des Gemeinschaftsparametersatzes G in dem Kommunikationsnetzwerk 60 kann in beliebiger Weise durchgeführt werden; als vorteilhaft wird es jedoch angesehen, wenn eine Peer-to-Peer-Funktionalität gewährleistet wird.

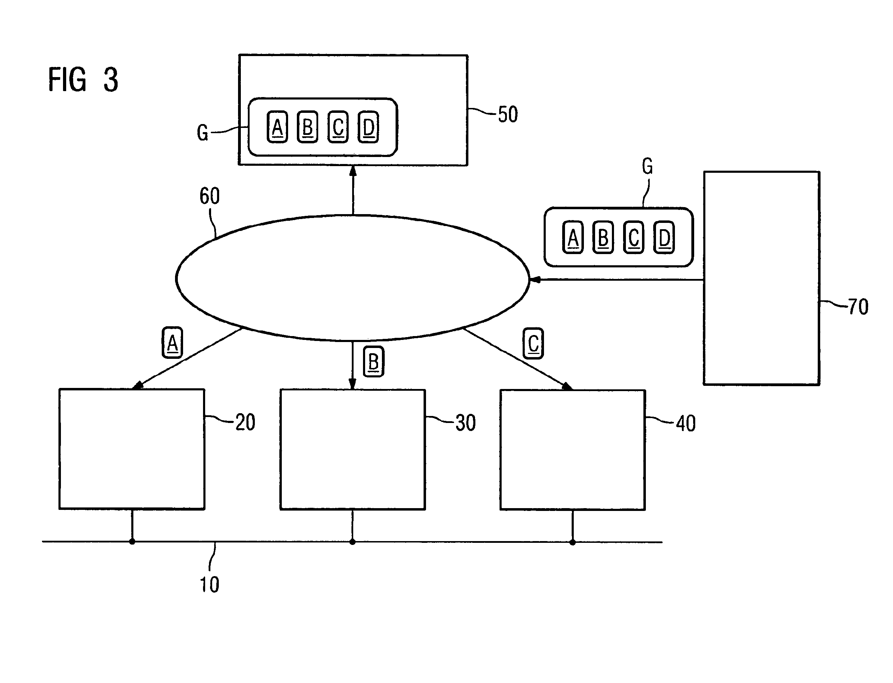

Eine Peer-to-Peer-Struktur lässt sich beispielsweise erreichen, wenn der Gemeinschaftsparametersatz G in der Schaltanlagenstation 50, beispielsweise in einem Zentralgerät der Schaltanlagenstation 50, abgespeichert wird. Eine solche Ausführungsform ist beispielhaft in der Figur 3 gezeigt. Bei dieser Ausgestaltung der Anordnung werden die drei Feldgeräte 20, 30 und 40 über das Peer-to-Peer-Kommunikationsnetzwerk 60 auf den Gemeinschaftsparametersatz G zugreifen und ihre jeweiligen Parametersätze extrahieren; dies bedeutet, dass beispielsweise das Feldgerät 20 den Parametersatz A, das Feldgerät 30 den Parametersatz B und das Feldgerät 40 den Parametersatz C extrahieren wird.

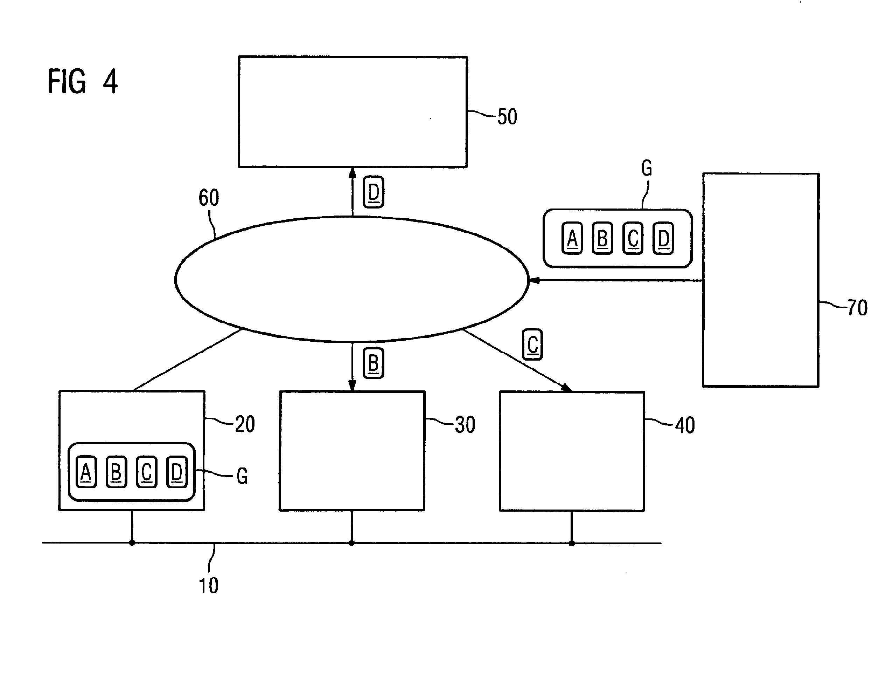

In der Figur 4 ist ein anderes Ausführungsbeispiel für eine erfindungsgemäße Anordnung gezeigt, anhand derer eine andere erfindungsgemäße Verfahrensvariante beispielhaft erläutert wird. Bei diesem Ausführungsbeispiel ist der Gemeinschaftsparametersatz G nicht in der Schaltanlagenstation 50, sondern in dem Feldgerät 20 abgespeichert. Somit werden die übrigen Feldgeräte 30 und 40 sowie die Schaltanlagenstation 50 ihre jeweiligen Parametersätze aus diesem Gemeinschaftsparametersatz G extrahieren: Die Schaltanlagenstation 50 wird also aus dem Gemeinschaftsparametersatz G ihren Parametersatz D und die beiden übrigen Feldgeräte 30 und 40 die Parametersätze B und C extrahieren.

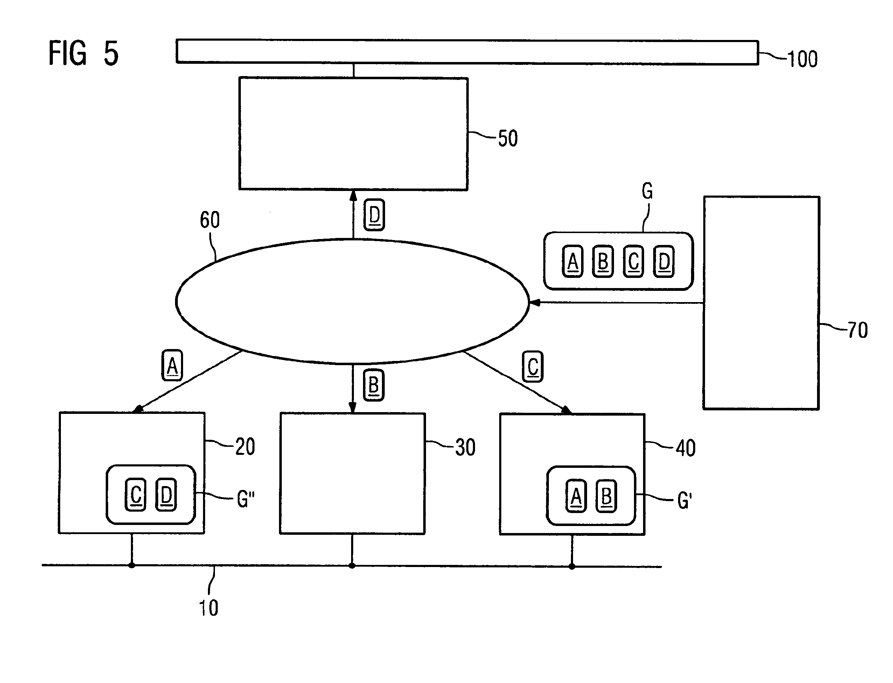

In der Figur 5 ist ein weiteres Ausführungsbeispiel für das Abspeichern des Gemeinschaftsparametersatzes G dargestellt. Bei diesem Ausführungsbeispiel ist der Gemeinschaftsparametersatz G innerhalb der Peer-to-Peer-Netzwerkarchitektur 60 verteilt abgespeichert, indem ein Teil-Gemeinschaftsparametersatz G' mit einzelnen Parametersätzen, beispielsweise mit den Parametersätzen A und B für die beiden Feldgeräte 20 und 30, in dem Feldgerät 40 und ein weiterer Teil-Gemeinschaftsparametersatz G" mit den beiden Parametersätzen C und D für das Feldgerät 40 und die Schaltanlagenstation 50 in dem Feldgerät 20 abgespeichert sind.

Bei dieser beispielhaften Ausgestaltung werden die drei Feldgeräte sowie die Schaltanlagenstation 50 jeweils über das Kommunikationsnetzwerk 60 auf den Teil des jeweiligen Teil-Gemeinschaftsparametersatzes G' bzw. G" zugreifen, in dem der für sie relevante Parametersatz enthalten ist. So wird beispielsweise das Feldgerät 20 aus dem Teil-Gemeinschaftsparametersatz G' den Parametersatz A extrahieren und anschließend eine entsprechende Parametrierung durchführen. In entsprechender Weise werden die beiden übrigen Feldgeräte 30 und 40 sowie die Schaltanlagenstation 50 auf die beiden Teil-Gemeinschaftsparametersätze G' und G" zugreifen, um den jeweils relevanten Parametersatz erhalten zu können.

Ein vorteilhafter Aspekt der in der Figur 5 gezeigten verteilten Abspeicherung des Gemeinschäftsparametersatzes G im Kommunikationsnetzwerk 60 besteht darin, dass keines der Geräte 20, 30, 40 oder 50 in der Lage ist, den kompletten Gemeinschaftsparametersatz G zu kopieren oder zu stehlen. Ein Datendiebstahl über eines der genannten Geräte 20, 30, 40 und 50 ist daher gar nicht oder nur mit sehr hohem Aufwand möglich.

Um ein illegales Kopieren von Teil-Gemeinschaftsparametersätzen G' oder G" oder des kompletten Gemeinschaftsparametersatzes G noch weiter zu erschweren, wird es darüber hinaus als vorteilhaft angesehen, wenn diese in einer kodierten Form abgespeichert werden; in den Geräten 20, 30, 40 und 50 wird dann vorzugsweise jeweils nur ein Teilschlüssel hinterlegt, der ein Entschlüsseln und Extrahieren des jeweils für das Gerät nötigen Geräteparametersatzes ermöglicht, nicht jedoch ein Kopieren oder Extrahieren von Parametersätzen anderer Geräte.

In der Figur 5 erkennt man außerdem eine Netzleitebene 100, die der Schaltanlagenstation 50 hierarchisch übergeordnet, ist. Eine solche Netzleitebene 100 kann im Übrigen auch bei den Anordnungen gemäß den Figuren 1-4 vorhanden sein, selbst wenn diese dort nicht explizit gezeigt ist.

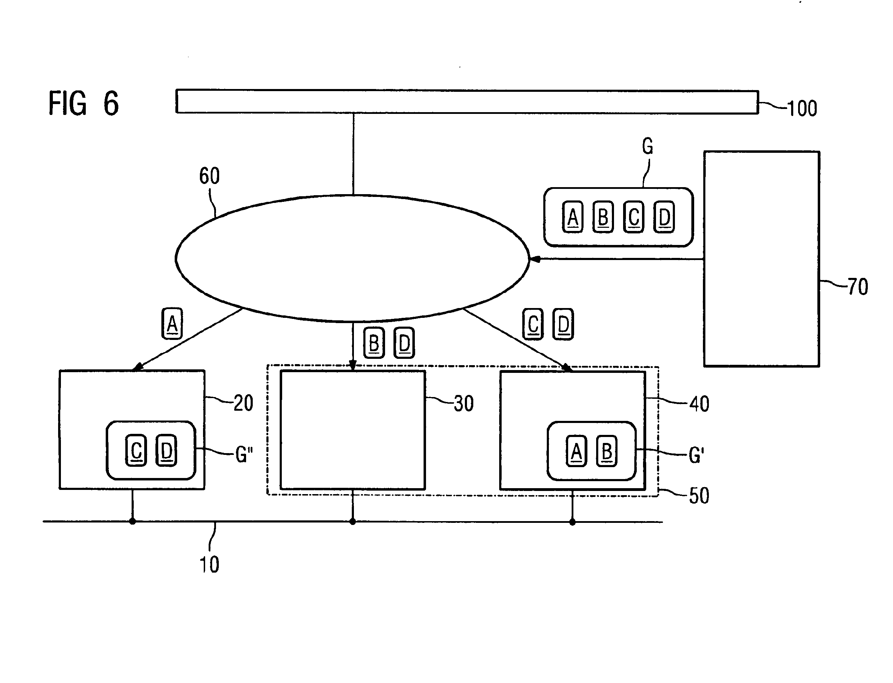

In der Figur 6 ist ein Ausführungsbeispiel für eine erfindungsgemäße Anordnung gezeigt, bei der eine Schaltanlagenstation 50 hardwaremäßig fehlt und diese funktional durch die Feldgeräte 30 und 40 ersetzt ist. Zu diesem Zweck extrahieren die Feldgeräte 30 und 40 auch den Parametersatz D, um die Funktionalität der Schaltanlagenstation 50 gemeinsam nachbilden zu können.

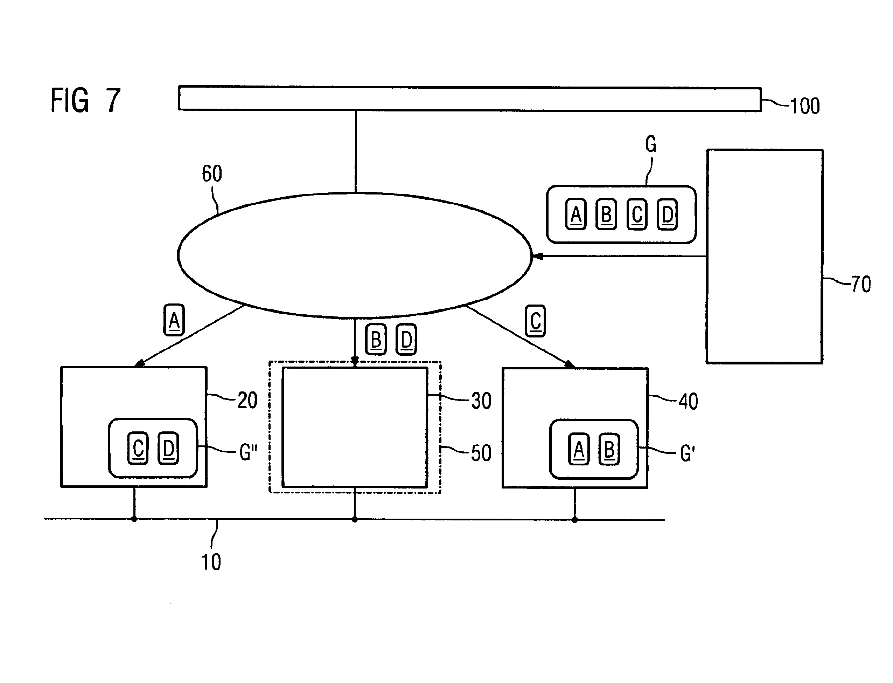

In der Figur 7 ist ein Ausführungsbeispiel für eine erfindungsgemäße Anordnung gezeigt, bei der die Schaltanlagenstation 50 funktional allein durch das Feldgerät 30 nachgebildet wird.

## Patentansprüche

1. Verfahren zum Parametrieren einer Schaltanlagenstation (50) einer elektrischen Schaltanlage (10) und zum Parametrieren von der Schaltanlagenstation (50) zugeordneten Feldgeräten (20, 30, 40) der elektrischen Schaltanlage, wobei bei dem Verfahren Parameter zum Parametrieren der Schaltanlagenstation und Parameter zum Parametrieren der Feldgeräte erzeugt werden,
**dadurch gekennzeichnet, dass**
- ein Gemeinschaftsparametersatz (G) generiert wird, aus dem sowohl ein die Funktionsweise der Schaltanlagenstation festlegender Stationsparametersatz (D) als auch für jedes Feldgerät jeweils ein Feldgeräteparametersatz (A, B, C) extrahierbar ist,
- der Gemeinschaftsparametersatz in einem Kommunikationsnetzwerk (60) allen daran angeschlossenen Feldgeräten zur Verfügung gestellt wird und
- jedes Feldgerät den zugehörigen Feldgeräteparametersatz aus dem Gemeinschaftsparametersatz über das Kommunikationsnetzwerk extrahiert und sich gemäß dem extrahierten Feldgeräteparametersatz parametriert.

2. Verfahren nach Anspruch 1,
**dadurch gekennzeichnet, dass**
die Funktion der Schaltanlagenstation durch eines der Feldgeräte (30) oder durch zumindest zwei Feldgeräte (30, 40) gemeinsam wahrgenommen wird.

3. Verfahren nach Anspruch 1 oder 2,
**dadurch gekennzeichnet, dass**
der Gemeinschaftsparametersatz mit einem Konfigurationssystem (70) erzeugt wird, das an das Kommunikationsnetzwerk angeschlossen ist.

4. Verfahren nach einem der voranstehenden Ansprüche,
**dadurch gekennzeichnet, dass**
das Kommunikationsnetzwerk mit einer Peer-to-Peer-Netzwerkarchitektur betrieben wird.

5. Verfahren nach Anspruch 4,
**dadurch gekennzeichnet, dass**
der Gemeinschaftsparametersatz innerhalb der Peer-to-Peer-Netzwerkarchitektur redundant gespeichert wird.

6. Verfahren nach einem der voranstehenden Ansprüche 4-5,
**dadurch gekennzeichnet, dass**
der Gemeinschaftsparametersatz innerhalb der Peer-to-Peer-Netzwerkarchitektur in der Schaltanlagenstation gespeichert wird.

7. Verfahren nach Anspruch 6,
**dadurch gekennzeichnet, dass**
- jedes Feldgerät den Gemeinschaftsparametersatz ganz oder teilweise lädt, den zugehörigen Feldgeräteparametersatz aus dem Gemeinschaftsparametersatz extrahiert und sich gemäß dem extrahierten Feldgeräteparametersatz parametriert.

8. Verfahren nach einem der voranstehenden Ansprüche 4-5,
**dadurch gekennzeichnet, dass**
der Gemeinschaftsparametersatz innerhalb der Peer-to-Peer-Netzwerkarchitektur in einem Feldgerät gespeichert wird.

9. Verfahren nach Anspruch 8,
**dadurch gekennzeichnet, dass**
- die übrigen Feldgeräte den Gemeinschaftsparametersatz ganz oder teilweise laden, den zugehörigen Feldgeräteparametersatz aus dem Gemeinschaftsparametersatz extrahieren und sich gemäß dem extrahierten Feldgeräteparametersatz parametrieren.

10. Verfahren nach einem der voranstehenden Ansprüche 4-5, **dadurch gekennzeichnet, dass**
der Gemeinschaftsparametersatz innerhalb der Peer-to-Peer-Netzwerkarchitektur verteilt gespeichert wird.

11. Verfahren nach Anspruch 10,
**dadurch gekennzeichnet, dass**
- die Feldgeräte den zugehörigen Feldgeräteparametersatz aus dem verteilt gespeicherten Gemeinschaftsparametersatz über das Kommunikationsnetzwerk extrahieren und sich gemäß dem extrahierten Feldgeräteparametersatz parametrieren.

12. Verfahren nach Anspruch 10 oder 11,
**dadurch gekennzeichnet, dass**
der Gemeinschaftsparametersatz auf mindestens zwei Feldgeräte verteilt gespeichert wird.

13. Verfahren nach einem der voranstehenden Ansprüche 1-3, **dadurch gekennzeichnet, dass**
- das Kommunikationsnetzwerk mit einer Server-Client-Netzwerkarchitektur betrieben wird und
- die Feldgeräte den Gemeinschaftsparametersatz unter Nutzung von Server-Client-Verbindungen laden.

14. Verfahren nach Anspruch 13,
**dadurch gekennzeichnet, dass**
der Gemeinschaftsparametersatz innerhalb der Server-Client-Netzwerkarchitektur redundant gespeichert wird.

15. Verfahren nach einem der voranstehenden Ansprüche 13-14,
**dadurch gekennzeichnet, dass**
der Gemeinschaftsparametersatz innerhalb der Server-Client-Netzwerkarchitektur in der Schaltanlagenstation oder in einem Feldgerät gespeichert wird.

16. Anordnung mit
- einer Schaltanlagenstation (50),
- Feldgeräten (20, 30, 40) und
- einem Konfigurationssystem (70) zum Parametrieren der Schaltanlagenstation und zum Parametrieren der Feldgeräte, **dadurch gekennzeichnet, dass**
- das Konfigurationssystem geeignet ist, einen Gemeinschaftsparametersatz (G) zu generieren, aus dem sowohl ein die Funktionsweise der Schaltanlagenstation festlegender Stationsparametersatz als auch für jedes Feldgerät jeweils ein Feldgeräteparametersatz extrahierbar ist, und
- in einem die Feldgeräte verbindenden Kommunikationsnetzwerk (60) der jeweils aktuelle Gemeinschaftsparametersatz allen Feldgeräten zumindest zur Extraktion des eigenen Feldgeräteparametersatzes zur Verfügung steht.

17. Anordnung nach Anspruch 16,
**dadurch gekennzeichnet, dass**
die Schaltanlagenstation durch eines oder mehrere Feldgeräte gemeinsam gebildet ist, wobei das oder die Feldgeräte geeignet sind, aus dem Gemeinschaftsparametersatz den Stationsparametersatz zu extrahieren.

## Claims

1. Method for configuration of a switchgear assembly station (50) of an electrical switchgear assembly (10) and for configuration of field devices (20, 30, 40), which are associated with the switchgear assembly station (50), in the electrical switchgear assembly, wherein, in the method, parameters are produced for configuration of the switchgear assembly station and parameters are produced for configuration of the field devices,
**characterized in that**
- a common parameter set (G) is generated, from which both a station parameter set (D) which defines the method of operation of the switchgear assembly station and in each case one field device parameter set (A, B, C) can be extracted for each field device,
- the common parameter set is made available in a communication network (60) to all the field devices connected thereto, and
- each field device extracts the associated field device parameter set from the common parameter set via the communication network, and configures itself on the basis of the extracted field device parameter set.

2. Method according to Claim 1,
**characterized in that**
the function of the switchgear assembly station is carried out by one of the field devices (30), or by at least two field devices (30, 40) jointly.

3. Method according to Claim 1 or 2,
**characterized in that**
the common parameter set is produced by a configuration system (70) which is connected to the communication network.

4. Method according to one of the preceding claims,
**characterized in that**
the communication network is operated with a peer-to-peer network architecture.

5. Method according to Claim 4,
**characterized in that**
the common parameter set is stored redundantly within the peer-to-peer network architecture.

6. Method according to one of the preceding Claims 4-5,
**characterized in that**
the common parameter set is stored within the peer-to-peer network architecture in the switchgear assembly station.

7. Method according to Claim 6,
**characterized in that**
- each field device entirely or partially loads the common parameter set, extracts the associated field device parameter set from the common parameter set, and configures itself on the basis of the extracted field device parameter set.

8. Method according to one of the preceding Claims 4-5,
**characterized in that**
the common parameter set is stored within the peer-to-peer network architecture in a field device.

9. Method according to Claim 8,
**characterized in that**
- the other field devices entirely or partially load the common parameter set, extract the associated field device parameter set from the common parameter set, and configure themselves on the basis of the extracted field device parameter set.

10. Method according to one of the preceding Claims 4-5,
**characterized in that**
the common parameter set is stored in a distributed form within the peer-to-peer network architecture.

11. Method according to Claim 10,
**characterized in that**
- the field devices extract the associated field device parameter set from the common parameter set, which is stored in a distributed form, via the communication network, and configure themselves on the basis of the extracted field device parameter set.

12. Method according to Claim 10 or 11,
**characterized in that**
the common parameter set is stored in a distributed form in at least two field devices.

13. Method according to one of the preceding Claims 1-3, **characterized in that**
- the communication network is operated with a server-client network architecture, and
- the field devices load the common parameter set using server-client connections.

14. Method according to Claim 13,
**characterized in that**
the common parameter set is stored redundantly within the server-client network architecture.

15. Method according to one of the preceding Claims 13-14,
**characterized in that**
the common parameter set is stored within the server-client network architecture in the switchgear assembly station or in a field device.

16. Arrangement having
- a switchgear assembly station (50),
- field devices (20, 30, 40) and
- a configuration system (70) for configuration of the switchgear assembly station and for configuration of the field devices,
**characterized in that**
- the configuration system is suitable for generating a common parameter set (G), from which both a station parameter set which defines the method of operation of the switchgear assembly station and in each case one field device parameter set can be extracted for each field device, and
- the respectively up-to-date common parameter set is made available in a communication network (60), which connects the field devices, to all the field devices, at least for extraction of their own field device parameter set.

17. Arrangement according to Claim 16,
**characterized in that**
the switchgear assembly station is formed jointly by one or more field devices, with the field device or field devices being suitable for extracting the station parameter set from the common parameter set.

## Revendications

1. Procédé de paramétrage d'un poste ( 50 ) d'une installation ( 10 ) électrique de commutation et de paramétrage d'appareils ( 20, 30, 40 ) de terrain associés au poste ( 50 ) de l'installation de commutation, procédé dans lequel on produit des paramètres pour paramétrer les postes de l'installation de commutation et des paramètres pour paramétrer les appareils de terrain,
**caractérisé en ce que**
- on produit un jeu ( G) de paramètres de communauté, à partir duquel on peut extraire tant un jeu ( D ) de paramètres de poste fixant le mode de fonctionnement du poste de l'installation de commutation qu'également pour chaque appareil de terrain respectivement un jeu ( A, B, C ) de paramètres d'appareils de terrain,
- on met le jeu de paramètres de communauté à disposition dans un réseau ( 60 ) de communication de tous les appareils de terrain qui y sont raccordés, et
- chaque appareil de terrain extrait le jeu de paramètres d'appareil de terrain qui lui appartient du jeu de paramètres de communauté par l'intermédiaire du réseau de communication et se paramétrise suivant le jeu de paramètres d'appareils de terrain extrait.

2. Procédé suivant la revendication 1,
**caractérisé en ce que**
on observe conjointement le fonctionnement du poste de l'installation de commutation par l'un des appareils ( 30 ) de terrain ou par au moins deux appareils ( 30, 40 ) de terrain.

3. Procédé suivant la revendication 1 ou 2,
**caractérisé en ce que**
on produit le jeu de paramètres de communauté par un système ( 70 ) de configuration qui est raccordé au réseau de communication.

4. Procédé suivant l'une des revendications précédentes,
**caractérisé en ce qu'**on fait fonctionner le réseau de communication en ayant une architecture de réseau peer-to-peer.

5. Procédé suivant la revendication 4,
**caractérisé en ce que**
l'on mémorise de manière redondante le jeu de paramètres de communauté au sein de l'architecture de réseau peer-to-peer.

6. Procédé suivant l'une des revendications précédentes 4 à 5,
**caractérisé en ce que**
l'on mémorise le jeu de paramètres de communauté au sein de l'architecture de réseau peer-to-peer dans le poste de l'installation de commutation.

7. Procédé suivant la revendication 6,
**caractérisé en ce que**
- chaque appareil de terrain charge en tout ou partie le jeu de paramètres de communauté, extrait le jeu de paramètres d'appareils de terrain qui lui appartient du jeu de paramètres de communauté et se paramétrise suivant le jeu de paramètres d'appareils de terrain qui a été extrait.

8. Procédé suivant l'une des revendications précédentes 4 à 5,
**caractérisé en ce que**
l'on mémorise le jeu d'appareils de communauté au sein de l'architecture de réseau peer-to-peer dans un appareil de terrain.

9. Procédé suivant la revendication 8,
**caractérisé en ce que**
- les autres appareils de terrain chargent en tout ou partie le jeu de paramètres de communauté, extraient le jeu de paramètres d'appareils de terrain qui leur appartient du jeu de paramètres de communauté et se paramétrisent suivant le jeu de paramètres d'appareils de terrain qui a été extrait.

10. Procédé suivant l'une des revendications précédentes 4 à 5,
**caractérisé en ce que**
l'on mémorise de manière répartie le jeu de paramètres de communauté au sein de l'architecture peer-to-peer.

11. Procédé suivant la revendication 10,
**caractérisé en ce que**
- les appareils de terrain extraient, par l'intermédiaire du réseau de communication, le jeu de paramètres d'appareils de terrain qui leur appartient à partir du jeu de paramètres de communauté mémorisé de manière répartie et se paramétrisent suivant le jeu de paramètres d'appareils de terrain qui a été extrait.

12. Procédé suivant la revendication 10 ou 11,
**caractérisé en ce que**
l'on mémorise le jeu de paramètres de communauté d'une manière répartie sur au moins deux appareils de terrain.

13. Procédé suivant l'une des revendications précédentes 1 à 3,
**caractérisé en ce que**
- on fait fonctionner le réseau de communication avec une architecture de réseau serveur-client et
- les appareils de terrain chargent le jeu de paramètres de communauté en utilisant des liaisons serveur-client.

14. Procédé suivant la revendication 13,
**caractérisé en ce que**
l'on mémorise le jeu de paramètres de communauté d'une manière redondante au sein de l'architecture de réseau serveur-client.

15. Procédé suivant l'une des revendications précédentes 13 à 14,
**caractérisé en ce que**
l'on mémorise le jeu de paramètres de communauté au sein de l'architecture de réseau serveur-client dans le poste de l'installation de commutation ou dans un appareil de terrain.

16. Dispositif comprenant
- un poste ( 50) d'installation de commutation,
- des appareils ( 20, 30, 40 ) de terrain et
- un système ( 70 ) de configuration pour paramétrer le poste de l'installation de commutation et pour paramétrer les appareils de terrain
**caractérisé en ce que**
- le système de configuration est propre à produire un jeu ( G ) de paramètres de communauté dont on peut extraire tant un jeu de paramètres de poste fixant le mode de fonctionnement du poste de l'installation de communication qu'également pour chaque appareil de terrain respectivement un jeu de paramètres d'appareils de terrain, et
- dans un réseau ( 60 ) de communication reliant les appareils de terrain, le jeu de paramètres de communauté instantanée respectif est mis à disposition de tous les appareils de terrain au moins pour l'extraction du propre jeu de paramètres d'appareils de terrain.

17. Dispositif suivant la revendication 16,
**caractérisé en ce que**
le poste de l'installation de commutation est formé conjointement par un ou par plusieurs appareils de terrain, le ou les appareils de terrain étant propres à extraire le jeu de paramètres de poste du jeu de paramètres de communauté.
